# EUROPEAN PATENT APPLICATION

(11) **EP 3 109 270 A1**
(43) Date of publication of application: **28.12.2016**
(21) Application number: 15461550.4
(22) Date of filing: 06.08.2015
(51) Int. Cl.: C08G 59/50, C08K 9/04

(54) **A METHOD OF OBTAINING A LATENT HARDENER, AN EPOXY RESIN COMPOUND AND A COMPOSITE MATERIAL**

(30) Priority: 24.06.2015 PL 41283115
(71) Applicant: Zachodniopomorski Uniwersytet Technologiczny w Szczecinie, 70-310 Szczecin (PL)
(72) Inventor: Pilawka, Ryszard, 70-361 Szczecin (PL); M ka, Honorata, 78-300 widwin (PL); Spychaj, Tadeusz, 70-781 Szczecin (PL); Zenker, Marek, 70-530 Szczecin (PL); Dziedzic, Piotr, 72-010 Police (PL)
(74) Representative: Zawadzka, Renata

(57) **Abstract**

A method of obtaining a latent hardener according to the invention is characteristic of the fact that a non-organic salt of a metal is dissolved in water and a carbon nanofiller is added in the amount from 5 to 20wt%, it is stirred, then an imidazole derivative is added and complexing is conducted for the time of 1 to 4 hours, next the content of the reactor is left alone from 0.5 to 24 hours at room temperature, the sediment is separated and purified. Copper (II) sulphate (VI) is used as a non-organic salt. Carbon nanotubes and/or graphene are used as a carbon nanofiller. As a derivative of an imidazole there are used 2- or 1-substituted imidazoles: 1-methylimidazole, 1-ethylimidazole, 1-butyloimidazole, 2-methylimidazole, 2-ethylimidazole, 2-butyloimidazole, 2-ethylo-4-methylimidazole. The sediment is separated by decantation and is purified by washing 4 times with acetone.

The composition of an epoxy resin consisting of an epoxy resin in the form of a bisphenol A derivative and a hardener is characteristic of being a product which is a result of a mechanical stirring of an epoxy resin in the amount of 92-96 parts by weight and a latent hardener in the amount of 4-8 parts by weight obtained according to the method described above. Its adhesiveness during 94 days of storage does not exceed 100 Pa·s.

The composite material obtained by casting followed by cross-linking is a product of thermal hardening of reactive compositions described above and is distinguished by cross electrical resistivity below 10⁴ Ω·cm.

## Description

Subject-matter of the invention involves a latent hardener, an epoxy resin compound with a latent hardener and a composite material obtained from an epoxy resin compound.

Hardeners belong to multifunctional compounds which react with epoxy groups (some of them also with hydroxyl groups in an epoxy resin). Latent hardeners are a group of cross-linking agents which at room temperature do not cause the curing process whereas at elevated temperature (100 - 150°C) decompose and cause fast cross-linking. Most latent hardeners make complex compounds based on very active cross-linking agents. To the frequently used ones belong dicyandiamide, adducts of boron flouride, derivatives of imidazoles (metal complexes), cross-linking agents with the use of ultraviolet radiation.

Well known from the works of the following groups of authors: J.M. Barton, G.J. Buist, 1. Hamerton, B.J. Howlin, J.R. Jones, S. Liu, J. Mater. Chem. 1994, 4, 379; J.M. Barton, I. Hamerton, B.J Howlin, J.R. Jones, S. Liu, Polymer 1998, 39, 1929 and 1. Hamerton, B.J. Howlin, P. Jepson, Coordination Chemistry Reviews 2002, 224, 67 as well as R. Pilawka, T. Spychaj, A. Leistner, Polimery 2008, 53 no. 7-8, 22 and the inventions: US 3635894, US 3677978 and US 4487914 are methods of obtaining complexes of metal cations with imidazole derivatives without the addition of carbon nanofillers in an aquatic environment or in a solution of methyl or ethyl alcohol, whose usage enables the storage of the composition at room temperature for no longer than 94 days.

On the other hand, there are known in literature ways of carbon nanotubes diffusion in an epoxy matrix where the necessity of using calenders, ultrasounds and intensive mechanical stirring has been proven. According to J.R. Potts, D.R. Dreyer, C.W. Bielawski, R.S. Ruoff, Graphene-based polymer nanocomposites, Polymer 2011, 52, 5-25, the lowest values of carbon nanofillers concentration which give the threshold of percolation in epoxy nanocomposites with GNT are by about 2 orders of magnitude higher than by applying CNT and amount respectively to 0.15wt% and 0.0025wt%. These low values of carbon nanofillers concentration in epoxy composites on the verge of threshold percolation were obtained with GNT or CNT prepared in laboratory conditions including long-term dispergation of ultrasonication methods. Obtained values of electric conduction (better with the use of CNT) are in the range of 10⁻⁹-10⁻³ S·cm⁻¹.

The dispersing method via a nanofiller's sonication cannot be effective enough in polymeric constructions of high viscosities. Moreover, it possesses constraints when it comes to the industrial application. In this situation a technique which is recommended as appropriate to be applied on a large scale by dispersing nanofillers in polymer matrixes is the usage of a three roll mill. By minimizing a fissure between the rolls and varied velocity of the rolls there are generated large shearing forces conducive to exfoliation of such laminated fillers like montmorillonite or graphene. According to M.A. Raza, A.V.K. Westwood, A.P. Brown, C. Stirling in "Texture, transport and mechanical properties of graphite nanoplatelet/silicone composites produced by three roll mill", Comp. Sci. Technol. 2012, 72, 467-475 it stands to reason that dispersing graphene or nanotubes is most efficient by using a three roll mill, next mechanical stirring and a mixer of a "dual asymetric centrifuge speed" type. It has the most beneficial effect on heat and electric conduction parameters as well as mechanical properties. The authors ascertained that applying the former of the above mentioned techniques enabled the achievement of the highest parameters of heat conduction by 8-15wt% GNT, i.e. by much lower concentration of nanofillers than by using other dispersing techniques.

The aim of this invention was to find out a way of obtaining latent cross-linking agents which enable dispersing nanofillers without the necessity of using calenders or ultrasounds and then a reactive casting/bonding composition of high electric conduction and simultaneously of long composition life-time being able to be stored at room temperature (for over 94 days).

A method of obtaining a latent hardener according to the invention is based on the fact that the non-organic salt of a metal is dissolved in water and then a carbon nanofiller in the amount from 5 to 20wt% is added, next it is stirred and a derivative of imidazole is added. Complexing takes from 1 to 4 hours and then the content of the reactor is left alone from 0.5 to 24 hours at room temperature, the sediment is separated and purified. Copper(II) sulphate (VI) is used as a non-organic salt. Carbon nanotubes and/or graphene are used as a carbon nanofiller. As a derivative of imidazole there are used 2- or 1-substituted imidazoles: 1-methylimidazole, 1-ethylimidazole, 1-butylimidazole, 2-methylimidazole, 2-ethylimidazole, 2-butyloimidazole, 2-ethylo-4-methylimidazole. The sediment is separated by decantation and is purified by washing 4 times with acetone.

The composition of an epoxy resin according to the invention consists of an epoxy resin in the form of a bisphenol A derivative and a hardener. It is characteristic of being a product which is a result of a mechanical stirring of an epoxy resin in the amount of 92-96 parts by weight and a latent hardener in the amount of 4-8 parts by weight obtained according to the method described above. Its viscosities during 94 days of storage does not exceed 100 Pa·s.

A composite material obtained by casting after cross-linking is characteristic of the fact that it is a product of thermal hardening of reactive compositions described above and is differentiated by cross resistivity below 10⁴ Ω·cm.

A method of obtaining a latent hardener with respect to the invention does not require usage of calanders, ultrasonic dispergators or high-speed mixers. The composition of the invention has a high electric conduction and simultaneously long life-time of compositions based on bisphenol A type Epidian 5 and Epidian 6, which can be stored at room temperature (for over 94 days).

The method of the invention is shown in the following examples of performance.

### Example 1

To 500.00 g of water these ingredients were added in the following order: 35.2 g of copper (II) sulphate (VI), 20 g of carbon nanotubes Nanocyl 7000, and next after 10 minutes of stirring 84.6 g of 2-ethylimidazole. The complexing reaction was carried out in an aquatic environment for 2 hours at room temperature. The content of the beaker was left alone for 22 hours and then the obtained sediment was separated by decantation, next it was cleansed 4 times with acetone (250 ml each). After cleansing the obtained product was dried under a fume cupboard and then refined in a mortar into powder. 138.2 g of black powder was obtained.

In a similar manner hardeners made of other carbon nanofillers containing 1 part by weight of nanotubes or graphene for 100 parts by weight of an epoxy resin were obtained.

### Example 2

To 50.00 g of water these ingredients were added in the following order: 3.5 g of copper (II) sulphate (VI), 1 g of carbon nanotubes Nanocyl 7000, and next after 10 minutes of stirring 8.2 g of 1-methylimidazole. The complexing reaction was carried out in an aquatic environment for 2 hours at room temperature. The content of the beaker was left alone for 22 hours and then the obtained sediment was separated by decantation, next it was cleansed 4 times with acetone (250 ml each). After cleansing the obtained product was dried under a fume cupboard and then refined in a mortar into powder. 13.2 g of black powder was obtained.

In a similar manner hardeners made of other carbon nanofillers containing 0.5 part by weight of nanotubes or graphene for 100 parts by weight of an epoxy resin were obtained.

### Example 3

To 200.00 g of water these ingredients were added in the following order: 17.6 g of copper (II) sulphate (VI) and a compound of 5 g of carbon nanotubes Nanocyl 7000 and 5 g of graphene GnX, and next after 10 minutes of stirring 42.3 g of 2-ethylimidazole. The complexing reaction was carried out in an aquatic environment for 2 hours at room temperature. The content of the beaker was left alone for 22 hours and then the obtained sediment was separated by decantation, next it was cleansed with 4 portions of acetone (150 ml each). After cleansing the obtained product was dried under a fume cupboard and then refined in a mortar into powder. 69 g of dark gray powder was obtained.

In a similar manner hardeners made of other hybrid carbon nanofillers containing in total 1 part by weight of nanotubes and graphene (e.g. 0.7 part by weight of nanotubes and 0.3 part by weight of graphene) for 100 parts by weight of an epoxy resin were obtained.

### Example 4

To 100.00 g of water these ingredients were added in the following order: 8.8 g of copper (II) sulphate (VI), a compound of 1.5 g of carbon nanotubes Nanocyl 7000, 1.0 g of graphene GnX, and next after 10 minutes of stirring 21.2 g of 2-ethylimidazole. The complexing reaction was carried out in an aquatic environment for 2 hours at room temperature. The content of the beaker was left alone for 22 hours and then the obtained sediment was separated by decantation, next it was cleansed with 3 portions of acetone (150 ml each). After cleansing the obtained product was dried under a fume cupboard and then refined in a mortar into powder. 32.2 g of dark gray powder was obtained.

In a similar manner hardeners made of other hybrid carbon nanofillers containing in total 0.5 part by weight of nanotubes and graphene (e.g. 0.3 parts by weight of nanotubes and 0.2 part by weight of graphene) for 100 parts by weight of an epoxy resin were obtained.

The composition of complexes of copper (II) cations with imidazole derivatives containing carbon nanofillers has been shown in table 1.

**Table 1**

| Type of a composition according to an example | Content of an ingredient [wt%] | | | |
|---|---|---|---|---|
| | **CuSO₄** | **Imidazole derivative** | **Nanotubes** | **Graphene** |
| **Example 1** | 25.2 | 60.5 | 14.3 | - |
| **Example 2** | 27.5 | 64.5 | 8.0 | - |
| **Example 3** | 25.2 | 60.4 | 7.2 | 7.2 |
| **Example 4** | 27.1 | 65.2 | 4.6 | 3.1 |

### Example 5

To 100 g of epoxy resin Epidian 6 there was introduced 7 g of the product obtained according to Example 1. The obtained compound was stored at room temperature for 94 days. The usefulness of a cross-linking agent as a hardener was determined by defining changes of adhesiveness at the time of the storage (table 2).

### Example 6

To 50 g of epoxy resin Epidian 6 there was introduced 6.5 g of the product obtained according to Example 2. The obtained compound was stored at room temperature for 94 days. The usefulness of a cross-linking agent as a hardener was determined by defining changes of adhesiveness at the time of the storage (table 2).

### Example 7

To 100 g of epoxy resin Epidian 6 there was introduced 7 g of the product obtained according to Example 3. The obtained compound was stored at room temperature for 94 days. The usefulness of a cross-linking agent as a hardener was determined by defining changes of adhesiveness at the time of the storage (table 2).

### Example 8

To 5 g of epoxy resin Epidian 6 there was introduced 0.65 g of the product obtained according to Example 4. The obtained compound was stored at room temperature for 94 days. The usefulness of a cross-linking agent as a hardener was determined by defining changes of adhesiveness at the time of the storage of the epoxy composition (table 2).

**Table 2**

| | | | | | | | |
|---|---|---|---|---|---|---|---|
| Type of a composition according to an example | Storage time [days] | | | | | | |
| | Composition viscosity **[Pa·s]** | **0** | **8** | **15** | **32** | **64** | **94** |
| **Example 5** | | 31.6 ± 0.1 | 37.9±0.2 | 39.9±0.2 | 41.7±0.5 | 46.9±0.2 | 86.3±0.3 |
| **Example 6** | | 19.3 ± 0.1 | 24.1±0.3 | 25.3±0.5 | 25.6±0.2 | 28.5±0.5 | 54.6±0.5 |
| **Example 7** | | 23.2 ± 0.3 | 29.1±0.2 | 30.5±0.1 | 30.6±0.1 | 34.2±0.3 | 62.4±0.2 |
| **Example 8** | | 15.1 ± 0.2 | 18.9±0.1 | 19.8±0.2 | 19.9±0.3 | 22.5±0.2 | 58.9±0,4 |

Epoxy compositions obtained in examples 5-8 were hardened within 4 hours at 40°C. Samples for endurance examinations for shearing of adhesive bonds and electric conduction were obtained. The results have been juxtaposed in table 2. The endurance for shearing and electric conduction of the epoxy material has been shown in table 3.

**Table 3**

| Type of a composition according to an example | Shear strength at room temperature **[MPa]** | Shear strength at 80°C **[MPa]** | Cross electrical resistivity **[Ω·m]** |
|---|---|---|---|
| **Example 5** | 8.64 ± 1.13 | 8.61 ± 0.82 | 6.53·10² |
| **Example 6** | 8.28 ± 0.49 | 8.46 ± 0.57 | 3.35·10³ |
| **Example 7** | 9.30 ± 0.43 | 10.1 ± 1.02 | 5.53·10³ |
| **Example 8** | 8.81 ± 0.39 | 8.42 ± 0.36 | 8.42·10³ |

## Claims

1. A method of obtaining a latent hardener, **characterized in that** a non-organic salt of a metal is dissolved in water and a carbon nanofiller is added in the amount from 5 to 20 weight %, it is stirred, then an imidazole derivative is added and complexing is conducted from 1 to 4 hours, next the content of the reactor is left alone from 0.5 to 24 hours at room temperature, the sediment is separated and purified.

2. A method of obtaining according to claim 1, **characterized in that** as a non-organic salt copper (II) sulphate (VI) is applied.

3. A method of obtaining according to claim 1, **characterized in that** as a carbon nanofiller carbon nanotubes and/or graphen are applied.

4. A method of obtaining according to claim 1, **characterized in that** as an imidazole derivative 2- or 1-substituted imidazoles are applied: 1-methylimidazole, 1-ethylimidazole, 1-butyloimidazole, 2-methylimidazole, 2-ethylimidazole, 2-butyloimidazole, 2-ethylo-4-methylimidazole.

5. A method of obtaining according to claim 1, **characterized in that** the sediment is separated by decantation.

6. A method of obtaining according to claim 1, **characterized in that** the sediment is purified by cleansing 4 times with acetone.

7. The composition of an epoxy resin containing an epoxy resin in the form of a bisphenol A derivative and a hardener, **characterized in that** it consists of a product which is a result of a mechanical stirring of an epoxy resin in the amount of 92-96 parts by weight and a latent hardener in the amount of 4-8 parts by weight obtained according to claims 1-6, and its adhesiveness during 94 days of storage does not exceed 100 Pa·s.

8. A composite material obtained by casting after cross-linking, **characterized in that** this is a product of thermal hardening of reactive compositions according to claim 7 and is differentiated by cross electrical resistivity below 10⁴ Ω·cm.
